# EUROPÄISCHE PATENTSCHRIFT

(11) **EP 0 880 920 B1**
(45) Veröffentlichungstag und Bekanntmachung des Hinweises auf die Patenterteilung: **14.11.2001**
(21) Anmeldenummer: 98890154.2
(22) Anmeldetag: 22.05.1998
(51) Int. Cl.: A47B 77/02, A47B 96/20

(54) **Verfahren zum Herstellen einer Arbeitsplatte**
Process for manufacture of a work surface
Procédé pour la fabrication d'une surface de travail

(30) Priorität: 30.05.1997 AT 33097 U
(43) Veröffentlichungstag der Anmeldung: 02.12.1998
(73) Patentinhaber: Lederhilger, Johann, 4621 Sipbachzell (AT)
(72) Erfinder: Lederhilger, Johann, 4621 Sipbachzell (AT)
(74) Vertreter: Hübscher, Gerhard, Dipl.-Ing.

(56) Entgegenhaltungen:
- EP-A- 0 562 300
- DE-A- 1 561 543
- GB-A- 1 223 185
- US-A- 2 981 580

## Beschreibung

Die Erfindung bezieht sich auf ein Verfahren zum Herstellen einer Arbeitsplatte aus einer an der Oberseite und zumindest einer Stirnseite deckplattenbeschichteten Kernplatte.

Arbeitsplatten, insbesondere Küchenarbeitsplatten, sind zum Schutz der Kernplatte vor eindringender Feuchtigkeit und zur Verbesserung der Oberflächeneigenschaften hinsichtlich Widerstandsfähigkeit und Festigkeit mit Deckschichten versehen, wobei es bekannt ist, die Oberseite und eine anschließende abgerundete Stirnseite mit einem Laminat zu beschichten und an der Unterseite eine Schutzfolie aufzuleimen, wobei allerdings die Laminateigenschaften nicht immer befriedigen und die untere Vorderseitenkante mit dem Stoß zwischen Laminat und Schutzfolie eine Schwachstelle in der Ummantelung bildet. Eine Beschichtung der Kernplatte mit eigenen Deckplatten, beispielsweise Mineralsteinplatten, die zwar die gewünschten Oberflächeneigenschaften mit sich bringen, aber wegen ihrer Sprödigkeit nicht wie Laminate gebogen verlegt werden können, ist bisher nur dadurch möglich, daß die Oberseite und die Stirnseite jeweils für sich mit entsprechend zugeschnittenen Deckplattenstücken und Deckplattenstreifen beklebt werden, was aber sehr aufwendig und zeitraubend und auch einer maschinellen Serienfertigung unzugänglich ist. Darüber hinaus bietet diese Deckplattenverkleidung aufgrund der unvermeidlichen Fugen zwischen Oberseite und Stirnseite bzw. Stirnseite und Unterseite keinen ausreichenden Schutz vor einem Feuchtigkeitszutritt zur innenliegenden Kernplatte und auch die angestrebte Oberflächenqualität im Stirnkantenbereich bleibt ungenügend. Bei einer oberseitigen Deckplattenbeschichtung wird daher auch bisher meist auf die stirnseitige Deckplattenbeschichtung verzichtet und für die Plattenstirnseite eine Spezialkleber- oder Laminatbeschichtung gewählt.

Der Erfindung liegt daher die Aufgabe zugrunde, diese Mängel zu beseitigen und ein Verfahren der eingangs geschilderten Art anzugeben, das eine rationelle und auch einheitliche Deckplattenbeschichtung der Kernplatte erlaubt und dabei eine optisch einwandfreie, wasserfeste Ummantelung des Stirnseitenbereiches mit sich bringt.

Die Erfindung löst diese Aufgabe dadurch, daß die Kernplatte zuerst an der Oberseite mit der Deckplatte beschichtet und dann in die Kernplatte an der Unterseite im Randbereich der zu beschichtenden Stirnseite wenigstens eine stirnseitenparallele, sich bis in die Deckplatte erstreckende V-Nut spanend eingearbeitet wird, worauf der genutete Randbereich um die Nutscheitellinien unter Zusammenklappen und Verkleben der Nutenflanken gefaltet wird. Je nach Form, Größe, gegenseitigem Abstand und Anordnung der V-Nuten kommt es durch diese Faltung zu unterschiedlichen Kantenprofilierungen der Arbeitsplatte bzw. Stirnseitenausgestaltungen, wobei aber stets die Deckplatte der Oberseite auch über die Stirnseite und gegebenenfalls zur Unterseite reicht und eine einheitliche Abdeckung mit gleichbleibenden Schutz- und Oberflächeneigenschaften ergibt. Zur Herstellung läßt sich die Kernplatte an der Oberseite mit einer entsprechenden Deckplatte bekleben, was mit üblichen Klebstoffen und in serienmäßigen Anlagen erfolgen kann, wobei die Deckplatte und auch die Kernplatte aus jedem geeigneten Material, vorzugsweise Mineralstein- bzw. Span- oder Schichtstoffplatten bestehen können. Die Deckplatten brauchen keinerlei verlegespezifische Eigenschaften, wie Biegeweichheit od. dgl., aufzuweisen und werden werkstoffspezifisch in üblicher Weise mit den dazu geeigneten Klebern aufgebracht. Nach dem Deckplattenbeschichten, mit dem gegebenenfalls gleichzeitig auch ein Gegenzug an der Kernplattenunterseite aufgebracht wird, folgt die von der jeweiligen Stirnseitenummantelung abhängige und vorgegebene Nutung des stirnseitigen Randbereiches, die ebenfalls serienmäßig und mit einfachen Holzbearbeitungsmaschinen durchführbar ist, wobei die Nuten allerdings bis in die Deckplatten und hier bis zu deren Außenseite reichen müssen. Abschließend braucht dann nurmehr ein geeigneter Kleber in die Nuten bzw. auf den Randbereich aufgestrichen und der Randbereich durch ein Zusammenklappen der Nuten gefaltet zu werden und die Arbeitsplatte ist im wesentlichen fertig. Dabei ergibt eine entsprechend gesetzte V-Nut mit der Klebereinfüllung nach dem Falten eine praktisch unsichtbare, absolut wasserdichte Fuge, die den Eindruck einer durchgehenden Deckplattenummantelung vermittelt.

Um eine scharfkantige Stirnseitenprofilierung zu vermeiden, können die Faltkanten abgerundet werden, wobei sich die Rundung innerhalb der Deckplattenstärke erstreckt und keine Unterbrechung der Deckplattenbeschichtung mit sich bringt.

Wird die Kernplatte im Randbereich mit dem Einarbeiten der V-Nuten auch in ihrer Dicke abgearbeitet, steigern sich die Möglichkeiten der Faltungsvarianten und der Ausgestaltung der Stirnseitenprofilierung, wobei ein Insichfalten des Randbereiches bei gleichbleibender Plattendicke eine Deckplattenbeschichtung ergibt, die von der Oberseite über die Stirnseite bis zur Unterseite reicht.

In der Zeichnung ist der Erfindungsgegenstand beispielsweise veranschaulicht, und zwar zeigen
- Fig. 1: eine nach dem erfindungsgemäßen Verfahren hergestellte Arbeitsplatte in Seitenansicht,
- Fig. 2a und 2b: die Herstellung dieser Platte anhand zweier Verfahrensschritte in Seitenansicht sowie die
- Fig. 3 bis 11: neun Ausführungsbeispiele einer nach dem erfindungsgemäßen Verfahren hergestellten Arbeitsplatte ebenfalls jeweils in Seitenansicht.

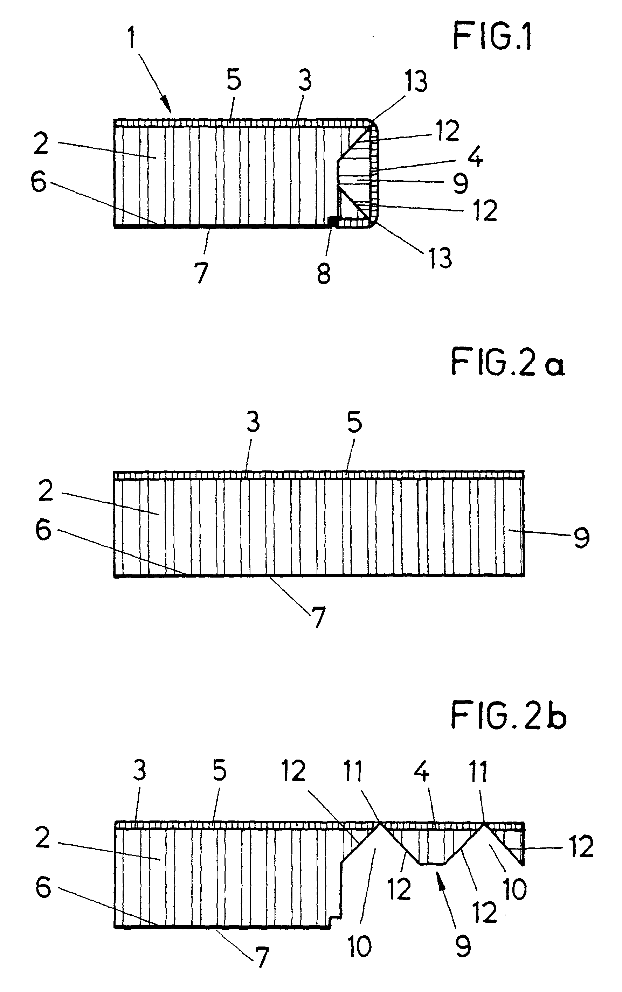

Wie in Fig. 1 angedeutet, besteht eine Arbeitsplatte 1 aus einer Kernplatte 2, beispielsweise eine Spanplatte, die an der Oberseite 3 und an einer Stirnseite 4 mit einer Deckplatte 5, vorzugsweise eine Mineralsteinplatte, beschichtet ist, wobei bevorzugt auch die Unterseite 6 der Kernplatte 2 im stirnseitigen Randbereich mit der Deckplatte 5 und anschließend mit einer Schutzfolie 7 als Gegenzug abgedeckt ist. Für die Fuge zwischen Deckplatte 5 und Schutzfolie 7 ist eine Polyurethanabdichtung 8 vorgesehen.

Um eine solche Arbeitsplatte rationell herstellen zu können, wird zuerst die Kernplatte 2 an der Oberseite 3 mit der Deckplatte 5 und an der Unterseite 6 mit der Schutzfolie 7 beschichtet (Fig. 2a) und dann an der Unterseite 6 im Randbereich 9 der zu beschichtenden Stirnseite 4 spanend bearbeitet und je nach Profilierung der Stirnkante mit einer oder mehreren V-Nuten 10 versehen, die bis in die Deckplatte 5 hineinragen und mit der Scheitellinie 11 im wesentlichen im Außenflächenbereich dieser Deckplatten liegen. Um zu verhindern, daß die Randteile durch eine solche Nutung auseinanderfallen, kann außen auf die Deckplatte 5 eine nicht weiter dargestellte Trägerfolie aufgebracht sein. Gleichzeitig mit dem Einarbeiten der Nuten 10 kann der Randbereich 9 entsprechend der Stirnkantenprofilierung auch in der Dicke abgearbeitet werden, so daß eine profilierungsgerechte Faltung des Randbereiches möglich wird. Zur Fertigstellung der Arbeitsplatte braucht dann lediglich unter Klebemittelauftrag dieser Randbereich um die Nutscheitellinien 11 gefaltet zu werden, wobei die Nutenflanken 12 zusammenklappen und verkleben, und nach einer abschließenden Abrundung der Faltkanten 13 und dem Aufbringen der Abdichtung 8 ist die Arbeitsplatte 1 fertig. Die Faltung bleibt bei entsprechend exakter Nutausbildung und unter Benutzung eines geeigneten Klebers auch im Faltkantenbereich ohne sichtbare Fuge und gewährleistet einen absolut wasserdichten Abschluß. Gegebenenfalls läßt sich diese Platte dann auf beliebige Art und Weise weiterbe- und verarbeiten.

Um eine Arbeitsplatte 1 gemäß Fig. 1 zu erzeugen, werden in den Randbereich 9 der Kernplatte 2 zwei mit Abstand voneinander angeordnete V-Nuten 10 eingearbeitet, wobei der Abstand der beiden Nutscheitellinien 11 der Stirnseitenhöhe entspricht und auch die Dicke des Randbereiches 9 entsprechend abgearbeitet werden muß.

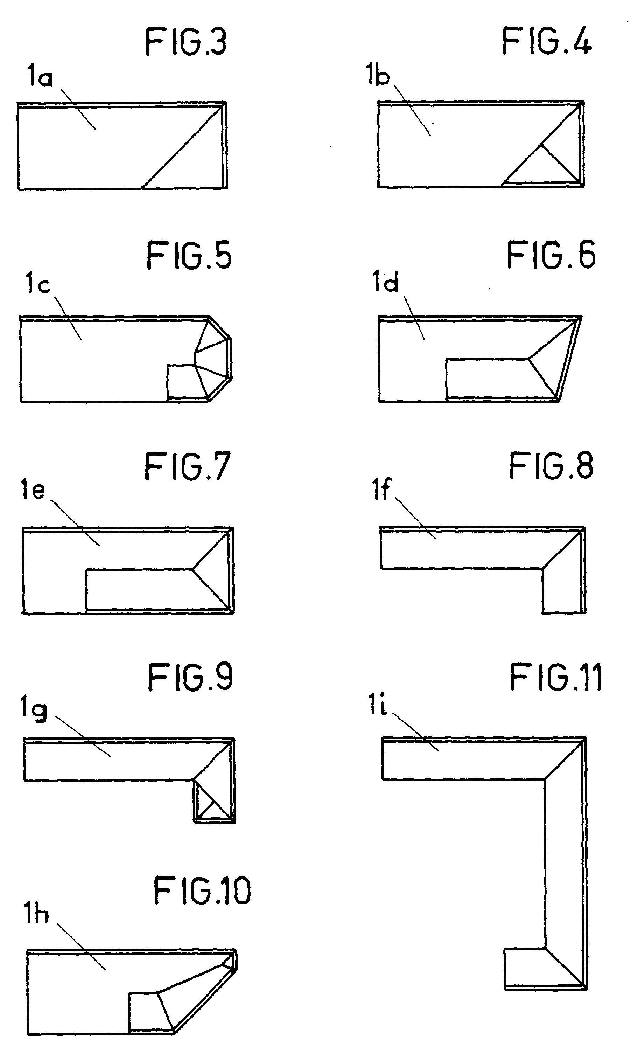

Durch geeignete Wahl der Anordnung, Gestaltung und Dimensionierung der V-Nuten bzw. der Dickenabarbeitung im Randbereich 9 der Kernplatten 2 lassen sich verschiedenste Stirnkantenprofilierungen im Zuge des erfindungsgemäßen Verfahrens erreichen, wie dies in den Fig. 3 bis 11 veranschaulicht ist.

So zeigt Fig. 3 eine Arbeitsplatte 1a, deren Stirnseite durch eine einfache Faltung entsteht, wobei sich die Deckplatte 5 allerdings nicht bis an die Unterseite 6 erstreckt. Fig. 4 zeigt eine Arbeitsplatte 1b mit zwei Faltungen und einer bis zur Unterseite hinunterreichenden Deckplattenbeschichtung bei rechtwinkeliger Profilierung, Fig. 5 zeigt eine Arbeitsplatte 1c mit einer Mehrfachfaltung, wobei die Stimkante polygonal profiliert ist. Fig. 6 zeigt eine Arbeitsplatte 1d mit einer schräg nach hinten verlaufenden Stirnseite und einer bis zur Unterseite hinunterreichenden Deckplattenbeschichtung, Fig. 7 zeigt eine Arbeitsplatte 1e mit einer über einen weitgestreckten Unterseitenbereich hindurchgehenden Deckplattenbeschichtung, Fig. 8 zeigt eine Arbeitsplatte 1f mit einem winkeligen Stirnkantenverlauf, Fig. 9 zeigt eine ähnliche Arbeitsplatte 1g mit einer aber zusätzlich um die Stirnseite und den Winkelschenkel hinüberreichenden Deckplattenbeschichtung, Fig.10 zeigt eine Arbeitsplatte 1h mit einer trapezförmig profilierten Stirnseite und Fig. 11 zeigt eine Arbeitsplatte 1i mit einem annähernd U-förmig profilierten Querschnitt im Stirnseitenbereich.

## Patentansprüche

1. Verfahren zum Herstellen einer Arbeitsplatte aus einer an der Oberseite und zumindest einer Stirnseite deckplattenbeschichteten Kernplatte, **dadurch gekennzeichnet, daß** die Kemplatte zuerst an der Oberseite mit der Deckplatte beschichtet und dann in die Kernplatte an der Unterseite im Randbereich der zu beschichtenden Stirnseite wenigstens eine stirnseitenparallele, sich bis in die Deckplatte erstreckende V-Nut spanend eingearbeitet wird, worauf der genutete Randbereich um die Nutscheitellinien unter Zusammenklappen und Verkleben der Nutenflanken gefaltet wird.

2. Verfahren nach Anspruch 1, **dadurch gekennzeichnet, daß** die Faltkanten abgerundet werden.

3. Verfahren nach Anspruch 1 oder 2, **dadurch gekennzeichnet, daß** die Kernplatte im Randbereich mit dem Einarbeiten der V-Nuten auch in ihrer Dicke abgearbeitet wird.

## Claims

1. A method of making a worktop from a core panel, which is covered at the top and at least at one end face by a cover board, **characterised in that** the core panel is first covered with the cover board at the top and then at least one V-groove is machined in the core panel at the underside in the edge zone of the end face for covering, said V-groove being parallel to the end face and extending into the cover board, whereupon the grooved edge zone is folded around the groove apex lines, the groove flanks being folded together and stuck.

2. A method according to claim 1, **characterised in that** the fold edges are rounded.

3. A method according to claim 1 or 2, **characterised in that** when the V-grooves are formed in the edge zone the core panel is also machined in respect of its thickness.

## Revendications

1. Procédé de fabrication d'une surface de travail, constituée d'une plaque centrale, revêtue, en face supérieure et au moins en une face frontale, par des plaques de couvertures, **caractérisé par le fait que** la plaque centrale est d'abord revêtue en face supérieure par la plaque de couverture et au moins une rainure en V, s'étendant jusque dans la plaque de couverture, parallèle aux faces frontale, est ensuite usinée avec enlèvement de copeaux, en face inférieure de la plaque centrale, dans la zone de bordure de la face frontale à revêtir, puis la zone de bordure rainurée est pliée autour des lignes de sommet de rainure, avec rabattement et collage des flancs de rainure.

2. Procédé selon la revendication 1, **caractérisé par le fait que** les arêtes de pliage sont arrondies.

3. Procédé selon la revendication 1 ou 2, **caractérisé par le fait que** l'usinage de la plaque centrale effectué dans la zone de bordure, avec l'aménagement des rainures en V, entraîne également une diminution de son épaisseur.
